(19) Europäisches Patentamt
European Patent Office
Office européen des brevets

(11) **EP 4 734 506 A1**

(12) **EUROPEAN PATENT APPLICATION**

(43) Date of publication:
**29.04.2026 Bulletin 2026/18**

(21) Application number: **24306770.9**

(22) Date of filing: **22.10.2024**

(51) International Patent Classification (IPC):
**H04N 19/105** (2014.01)   **H04N 19/11** (2014.01)
**H04N 19/14** (2014.01)   **H04N 19/176** (2014.01)
**H04N 19/593** (2014.01)

(52) Cooperative Patent Classification (CPC):
**H04N 19/11; H04N 19/105; H04N 19/14;**
**H04N 19/176; H04N 19/593**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **PURI, Saurabh**
**SAINT-LAZARE, J7T 0P6 (CA)**
• **BONNINEAU, Charles**
**MONTREAL, H2J 1G1 (CA)**
• **MARZUKI, Ismail**
**MONTREAL, H3J 1V4 (CA)**
• **NASER, Karam**
**35250 MOUAZE (FR)**

(74) Representative: **Interdigital**
**Immeuble ZEN 2**
**845 A, avenue des Champs Blancs**
**35510 Cesson-Sévigné (FR)**

(54) **METHOD AND APPARATUS FOR ENCODING/DECODING WITH DIMD**

(57)    In various implementations, methods and devices are disclosed that improve the diversity of the predictors used in the blending process of DIMD. For instance, predictors may be obtained by applying derived intra modes to different reference lines instead of the reference line closest to the current block. For instance, predictors may be obtained by computing independently a Histogram of Gradients per reference line. For instance, predictors obtained by computing independently a Histogram of Gradients per reference line may be used in template intra mode derivation TIMD.

FIG. 9

## Description

### BACKGROUND

The present application is related to a method and an apparatus for video encoding or decoding that modify the decoder-side intra mode derivation DIMD by applying some of the derived intra modes to a first reference line and others of the derived intra modes to a second reference line.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

### BRIEF SUMMARY

In various implementations, methods and devices are disclosed that improve the diversity of the predictors used in the blending process of DIMD. For instance, predictors may be obtained by applying derived intra modes to different reference lines instead of the reference line closest to the current block. For instance, predictors may be obtained by computing independently a Histogram of Gradients per reference line. For instance, derived intra mode obtained by computing independently a Histogram of Gradients per reference line may be used in template intra mode derivation TIMD.

Briefly stated, in one embodiment, a method of video encoding or decoding is disclosed that comprises determining that a decoder-side intra mode derivation DIMD is used for predicting a current block; obtaining a histogram of gradients computed on a neighboring template of the current block; deriving a plurality of intra modes corresponding to a plurality of largest magnitude of values in a histogram of gradients; obtaining a plurality of intra predictors by applying some of the plurality of intra modes to a first reference line and others of the plurality of intra modes to a second reference line; blending the plurality of intra predictors to obtain a predictor of the current block; and encoding or decoding the current block based on the predictor.

One or more embodiments also provide an apparatus for encoding/decoding video comprising one or more processors and at least one memory coupled to said one or more processors, wherein said one or more processors are configured to perform the encoding or decoding method according to any of the embodiments described herein.

One or more embodiments also provide a computer program comprising instructions which when executed by one or more processors cause the one or more processors to perform the encoding or decoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG.4 illustrates an example of the DIMD template used to form the gradients according to one or more embodiments of the present disclosure;

FIG.5 illustrates multiple reference lines MRL used by Intra prediction in VVC;

FIG.6 illustrates an example of extension of MRL concept according to one or more embodiments of the present disclosure;

FIG. 7 illustrates an example of template and multiple reference lines used in Template-based multiple reference line intra prediction according to one or more embodiments of the present disclosure;

FIG.8 illustrates another example of the DIMD template used to form the gradients according to one or more embodiments of the present disclosure; and

FIG. 9 illustrate a generic encoding or decoding method using DIMD according to one or more embodiments of the present disclosure.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

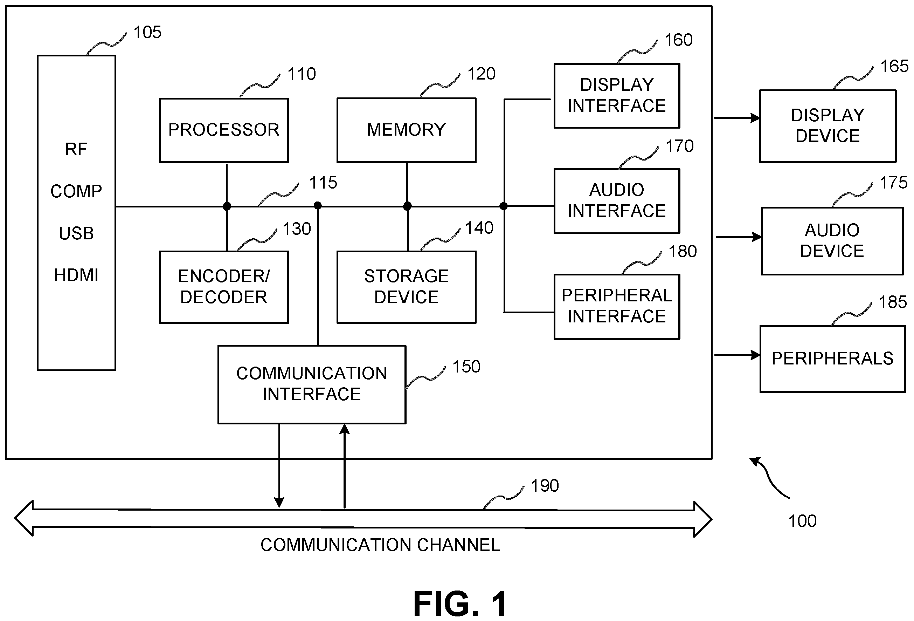

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

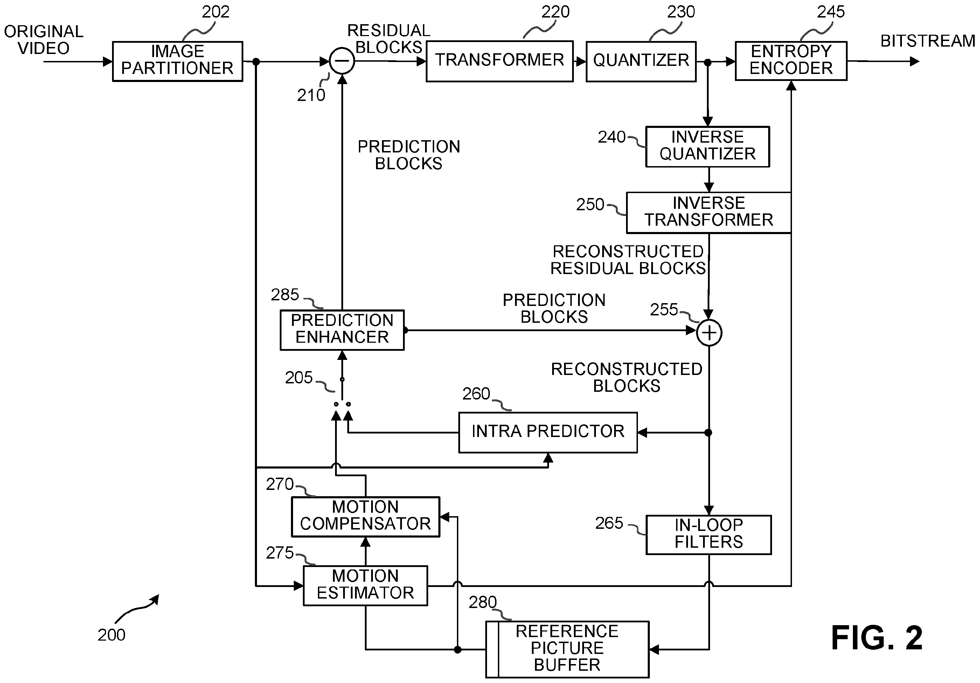

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

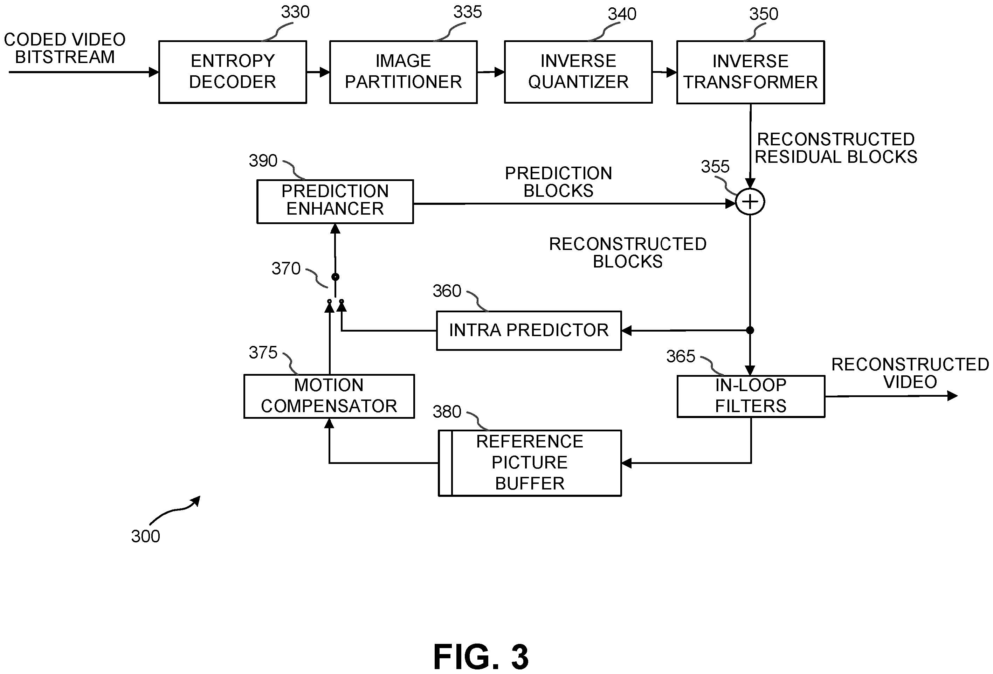

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Recent additions to video compression technology include various industry standards, versions of reference software and/or documentation such as Enhanced Compression Model (ECM) being developed by the JVET (Joint Video Exploration Team) group. The aim is to make further improvements to the existing VVC (Versatile Video Coding) standard and VSEI specification. More specifically, recent improvements to video compression technology includes decoder-side intra mode derivation (DIMD) and Template-based intra mode derivation (TIMD).

DIMD is a process that may be used by both the encoder and the decoder. According to DIMD, indices of two intra prediction modes (e.g., two intra prediction modes that most likely yield the predictions of the current block (e.g., luminance CB) of highest qualities according to DIMD) are derived (e.g., selected). The derivation may comprise creation (e.g., filling) of a Histogram of Oriented Gradients (HOG) of a context (e.g., an L-shape template) of decoded reference samples surrounding the current block. The indices of the two derived intra prediction modes may be the indices of the two HOG bins of largest magnitudes.

TIMD is a process that may be used by both the encoder and the decoder. According to TIMD, indices of the two intra prediction modes (e.g., two intra prediction modes that most likely yield the predictions of the current block (e.g., luminance CB) of highest qualities according to TIMD) are derived (e.g., selected). The derivation may comprise testing a plurality of intra prediction mode. For each tested intra prediction mode, a template of the current block (e.g., luminance CB) may be predicted from a set of decoded reference samples surrounding the template via this tested mode and the prediction SATD may be computed. The indices of the two derived intra prediction modes may be the indices of the two tested modes incurring the two smallest prediction SATDs.

Further details on DIMD and TIMD, and other recent features under investigation in ECM like Intra Fusion or Multiple Line Reference are provided in the following.

**Feature(s) associated with DIMD mode are provided herein.**

Decoder side intra mode derivation (DIMD) relies on the assumption that the reconstructed pixels surrounding a given block to be predicted may carry information to infer the texture directionality in this block, i.e. the intra prediction modes that most likely generate the predictions with the highest qualities.

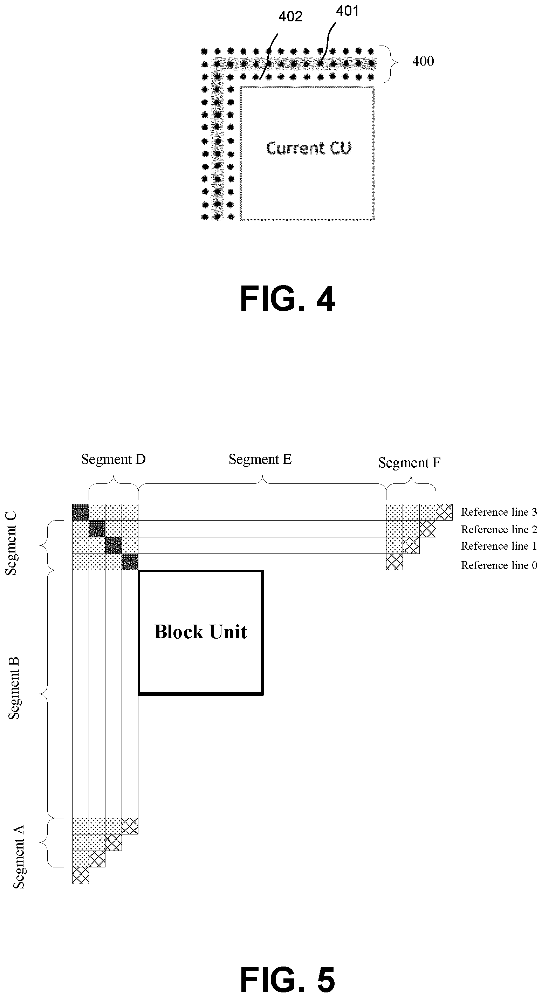

FIG.4 illustrates the DIMD template used to form the gradients according to one or more embodiments of the present disclosure. In a first step of the DIMD process, gradients are extracted from a context 400 of reconstructed pixels around this block using a fixed template of three lines above and left of current block as shown in FIG. 4. Then, in a second step, these gradients are used to fill a histogram of gradients (HoG) computed using the sobel filter. Finally, the intra prediction modes (IPMs) that most likely give the predictions with highest qualities are derived from this HoG. The predictors (e.g. top 5) obtained with the DIMD modes are then blended to form the final DIMD prediction. Uniform or spatial blending is used, where the DIMD predictors are combined with a Planar predictor or a Block-Vector based predictor, using weights that depend on the relative magnitudes of the modes in the histogram of gradients HoG.

In the latest development of ECM, DIMD is considered as a derived intra mode. These modes are included into the primary list of intra most probable modes (MPM), so the DIMD process is performed before the MPM list is constructed. The primary derived intra mode of a DIMD block is stored with a current block and is used for MPM list construction of the neighboring blocks.

In a recent addition to ECM, it is proposed to replace the fixed template of 3 lines above and left of the current block with an adaptive number of samples to improve the HoG computation for DIMD. This variant is referred to as Adaptive HoG in the following of the description. Specifically, DIMD template is extended to include more lines above and left of the current block. Three aspects are proposed in this variant. In a first aspect, more reference lines are used where farther lines have less weight when computing the HoG. In a second aspect, the construction of HoG is stopped when a cumulative sum of all amplitudes in the HoG reaches a certain threshold. In a third aspect, the number of predictors is extended from 5 to 11 for larger blocks.

**Feature(s) associated with TIMD mode are provided herein.**

Recent improvements to video compression technology further includes fusion for template-based intra mode derivation (TIMD). For each intra prediction mode in MPMs, as well as the wide-angle modes if the above-right and/or bottom-left reference samples are available, SATD between the prediction and reconstruction samples of the template is calculated. First two intra prediction modes with the minimum SATD and one non-angular intra prediction mode (i.e. DC or Planar) with the lowest SATD cost are selected as the TIMD modes. These three TIMD modes may be fused with the weights after applying PDPC process, and such weighted intra prediction is used to code the current CU. Position dependent intra prediction combination (PDPC) is included in the derivation of the TIMD modes.

The conditions below are checked to determine whether the non-angular intra prediction mode may be used in fusion:

- the non-angular intra prediction mode is different from the two selected intra prediction modes.
- costMode3 < 1.5*costMode1, where the costMode3 is the SATD cost of the non-angular intra prediction mode and costMode1 is the SATD cost of the first intra prediction mode.

If both conditions are true, three intra prediction modes are used to generate the prediction. And the weights of each intra prediction mode are computed from SATD cost:

$$weight_i = \frac{sumSATD - costMode_i}{2 \times sumSATD}, \quad sumSATD = \sum_{j=1}^{3} costMode_i.$$

Otherwise, the non-angular intra prediction mode is not used in prediction. And the costs of the two selected modes are compared with a threshold, in the test the cost factor of 2 is applied as follows:

$$costMode2 < 2*costMode1.$$

If this condition is true, the fusion is applied, otherwise the only model is used. Weights of the modes are computed from their SATD costs as follows:

$$weight1 = costMode2 / (costMode1 + costMode2)$$

$$weight2 = 1 - weight1$$

The division operations are conducted using the same lookup table (LUT) based integerization scheme used by the cross-component linear mode CCLM.

Besides, location-dependent sample-based fusion used in DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area.

**Feature(s) associated with Intra prediction fusion are provided herein.**

Recent improvements to video compression technology further includes fusion for intra prediction. This intra prediction method derives predicted samples as a weighted combination of multiple predictors generated from different reference lines. In this process multiple intra predictors are generated and then fused by weighted averaging. The process of deriving the predictors to be used in the fusion process is described as follows:

1) For angular intra prediction modes including the single mode case of TIMD and DIMD, the proposed method derives intra prediction by weighting intra predictions obtained from multiple reference lines represented as $p_{fusion} = w_0 p_{line} + w_1 p_{line+1}$, where $p_{line}$ is the intra prediction from the default reference line and $p_{line+1}$ is the prediction from the line above the default reference line. The weights are set as $w_0 = 3/4$ and $w_1 = 1/4$.
2) For TIMD mode with blending (also referred in the present disclosure as MRL-TIMD), $p_{line}$ is used for the first mode ($w_0 = 1$, $w_1 = 0$) and $p_{line+1}$ is used for the second mode ($w_0 = 0$, $w_1 = 1$).
3) For DIMD mode with blending (also referred in the present disclosure as MRL-DIMD), the number of predictors selected for a weighted average is increased from 5 to 6.

The angular intra prediction fusion method may be applied to luma blocks when angular intra mode has non-integer slope (which requires reference samples interpolation) and the block size is greater than 16, it may be used with MRL and may not applied for ISP coded blocks. The TIMD mode with blending method (MRL-TIMD) is applied when all the following conditions are satisfied:

- both the first and second modes are angular prediction mode;
- the current block is not ISP coded block;
- all of the following conditions are false:

   ○ abs(predModeIntra$_1$ - predModeIntra$_2$) is greater than Threshold. The value of Threshold is set to 8 or 4 depending on block size.
   ○ (predmodeIntra, - EXT_HOR_IDX) * (predModeIntra$_2$ - EXT _HOR_IDX) is less than 0.
   ○ (predmodeIntra, - EXT_VER_IDX) * (predModeIntra$_2$ - EXT_VER_IDX) is less than 0.

**Feature(s) associated with Multiple Reference Line (MRL) intra prediction are provided herein.**

Multiple Reference Lines (MRL) intra prediction in VVC uses more reference lines for intra prediction. FIG.5 illustrates multiple reference lines used by Intra prediction in VVC. In FIG. 5, an example of 4 reference lines is depicted (reference lines from 0 to 3), where the samples of segments A and F are not fetched from reconstructed neighbouring samples but padded with the closest samples from Segment B and E, respectively. HEVC intra-picture prediction uses the nearest reference line (i.e., reference line 0). In MRL, 2 additional lines (reference line 1 and reference line 3) are used.

The index of selected reference line (mrl_idx) is signalled and used to generate intra predictor. For reference line idx, which is greater than 0, only include additional reference line modes in MPM list and only signal mpm index without remaining mode. The reference line index is signalled before intra prediction modes, and Planar mode is excluded from intra prediction modes in case a nonzero reference line index is signalled.

MRL is disabled for the first line of blocks inside a CTU to prevent using extended reference samples outside the current CTU line. Also, PDPC is disabled when additional line is used. For MRL mode, the derivation of DC value in DC intra prediction mode for non-zero reference line indices is aligned with that of reference line index 0. MRL requires the storage of 3 neighboring luma reference lines with a CTU to generate predictions. The Cross-Component Linear Model (CCLM) tool also requires 3 neighboring luma reference lines for its down sampling filters. The definition of MRL to use the same 3 lines is aligned as CCLM to reduce the storage requirements for decoders.

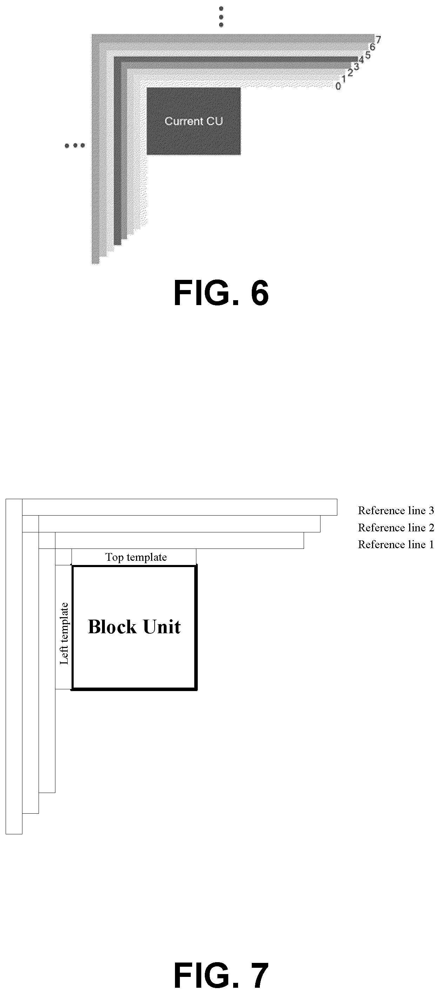

Recent additions to ECM include an extension of VVC MRL concept to consider more reference lines for intra prediction. FIG.6 illustrates an example of extension of MRL concept according to one or more embodiments of the present disclosure. In FIG.6, more than 3 multiple reference lines may be used by Intra prediction. The extended reference line list consists of line indices {1, 3, 5, 7, 12} as shown FIG. 6. For template-based intra mode derivation (TIMD), instead of the full MRL candidate list, only the first two reference line candidates, i.e., {1, 3}, may be used.

The Template-based multiple reference lines intra prediction (TMRL) mode combines a reference line and a prediction mode together and uses a template matching method to construct a list of candidate combinations. An index to the candidate combination list is coded to indicate which reference line and prediction mode is used in coding the current block. The regular multiple reference line (MRL) for the non-TIMD part may be replaced by TMRL mode.

The TMRL mode extends reference line candidate list and the intra-prediction-mode candidate list. The extended reference line candidate list is {1, 3, 5, 7, 12}. The size of the intra-prediction-mode candidate list is 10. The construction of the intra-prediction-mode candidate list is similar to MPM except the PLANAR mode is excluded from the intra-prediction-mode candidate list, DC mode is added after 5 neighboring PUs' modes and DIMD modes if its not included and the angular modes with delta angles from $\pm 1$ to $\pm 4$ (compared the existing angular modes in the intra-prediction-mode candidate list) are added. The precision of angular prediction is extended from 65 to 129. Additionally non-adjacent positions are added as candidates in constructing the intra candidate list. If the neighbouring or non-adjacent blocks are coded with SGPM or GPM modes, the intra modes of the blocks are replaced by the partitioning angles.

FIG. 7 illustrates an example of template and multiple reference lines used in Template-based multiple reference line intra prediction according to one or more embodiments of the present disclosure. The TMRL candidate may be constructed as follows. There are 5x10=50 combinations of the extended reference line and the allowed intra-prediction modes for a block. As shown on FIG. 7, since the extended reference line starts from reference line 1, the area previously covered by reference line 0 is used for template matching. The SAD costs over the template area are calculated between the predictions (generated by 50 combinations) and the reconstructions. The 20 combinations with the least SAD cost are selected in an ascending order to form the TMRL candidates list.

For TMRL signalling instead of coding the reference line and the intra mode directly, an index to the TMRL candidate list is coded to indicate which combination of reference line and prediction mode is used for coding the current block.

Further improvement to decoder-side intra mode derivation (DIMD) and Template-based intra mode derivation (TIMD) are desirable.

The present disclosure proposes adding diversity to the predictors by computing the predictors from other reference lines in the template area or by computing a HoG per other reference lines.

According to a first embodiment, it is proposed to obtain predictors by applying some of the plurality of derived intra modes to a first reference line and others of the plurality of derived intra modes to a second reference line. For instance, the first reference line is the closest to the current block (reference line 0 on FIG. 5), the second reference line (reference line 1 on FIG. 5) is adjacent above or left to the first reference line.

According to a second embodiment, it is proposed to obtain predictors by computing independently a Histogram of Gradients per reference line. For instance, at least one derived intra prediction mode is obtained that corresponds to the largest magnitude(s) of values in a respective histogram of gradients per reference line.

According to a third embodiment, it is proposed to combine predictors obtained by computing independently a Histogram of Gradients per reference line with template intra mode derivation TIMD.

**Feature(s) associated with computing predictors from other reference lines in the template area of DIMD are provided herein.**

In the first embodiment, it is proposed to obtain predictors by applying some of the plurality of derived intra modes to a first reference line and others of the plurality of derived intra modes to a second reference line. For instance, the first reference line is the closest to the current block, the second reference line is adjacent above or left to the first reference line.

As shown on FIG. 4, in the current design of ECM, DIMD mode computes a HoG on reference samples centered on the reference line 401. The first N derived intra prediction modes (IPMs) are chosen from the HoG as the modes corresponding to the bins with the largest magnitude to compute the N predictors on the same reference line, i.e the reference line closest to current block 402. In the first embodiment, some predictors are computed from the first reference line 402 and some from the reference line(s) 401 above and left of the first reference line to add diversity. The predictors from other reference lines are blended with the predictors from the first reference line to get the final predictor. For example, when adaptive HoG method is used, instead of having first N predictors computed on the first reference line, it is proposed to compute first K predictors on the first reference line, next L predictors on the second reference line and next M predictors on the third reference line and so on. The different predictors may be blended with each other (for example, based on the amplitude of the corresponding bins in HoG).

Accordingly, when 2 reference lines are used and the plurality of intra modes comprises N intra modes, K intra predictors are obtained by applying K first intra prediction modes of the plurality of intra modes to the first reference line; and N-K intra predictors are obtained by applying following N-K intra prediction modes of the plurality of derived intra modes to the second reference line above or left to the first reference line. In that case, N is an integer larger than 2 and K is an integer larger than 1.

Alternatively, when 3 reference lines are used and the plurality of intra modes comprises N intra modes, K intra predictors may be obtained by applying K first intra prediction modes of the plurality of intra modes to the first reference line; L intra predictors are obtained by applying following L intra prediction modes of the plurality of intra modes to a second reference line above or left to the first reference line; and M intra predictors are obtained by applying following M intra prediction modes of the plurality of intra modes to a third reference line above or left to the second reference line; with N, K, L and M being integer larger than 1 and N being equal to the sum of K, L and M.

According to a first variant embodiment, the neighboring template of the current block comprises more than 3 above and left lines as in the Adaptive HoG. In other words, the diversity of predictors from different reference lines may be only enabled when Adaptive HoG is enabled for DIMD mode, and the HoG is computed using multiple reference lines in the template area (e.g. more than 1).

According to a second variant embodiment, the plurality of intra modes comprises a greater number of modes than a regular DIMD. For instance, the diversity of predictors from different reference lines may be only enabled when adaptive HoG is enabled for DIMD mode, and the HoG is computed using multiple reference lines in the template area (e.g. more than 1), and a greater number of predictors (e.g. 11) are used than the predictors in regular DIMD (e.g. 5).

According to a third variant embodiment, the block predicted with DIMD has a size larger than a certain block size (e.g. 16x16). For instance, the diversity of predictors from different reference lines may be only enabled when adaptive HoG is enabled for DIMD mode, and the HoG is computed using multiple reference lines in the template area (e.g. more than 1), and for certain block sizes (e.g. large blocks only) where a greater number of predictors are used.

According to a fourth variant embodiment, it is proposed to analyze the first N intra prediction modes (IPMs) derived from the HoG to check for diversity in the modes themselves. For instance, diversity of the predictors may be increased by using the multiple reference lines only when the diversity of the derived modes is low. For instance, upon determining that an intra prediction mode and a successive intra prediction mode in the N derived intra modes are close, a first intra predictor is computed by applying the prediction mode to the first reference line and a second intra predictor is computed by applying the successive intra prediction mode to the second reference line. For instance, as detailed below, a prediction mode and a successive intra prediction mode in the plurality of intra mode may be close on condition that a difference between the prediction mode and the successive intra prediction mode is below a level.

If the $a^{th}$ best IPM pairs satisfy the criteria:

$$abs(IPM_a - IPM_{a+1}) < threshold$$

the $IPM_{a+1}$ use the reference line above and left of the reference line used by $IPM_a$ to obtain the predictor. The skilled in the art will notice that the criterion is easy to compute by simply analyzing the IPM mode. For example, there is no interaction with ISP mode.

For example, if $abs(IPM_1 - IPM_2) < threshold$, then $IPM_2$ use the reference line $l + 1$ and $IPM_1$ use the reference line $l$.

**Feature(s) associated with computing a HoG per reference line for DIMD are provided herein.**

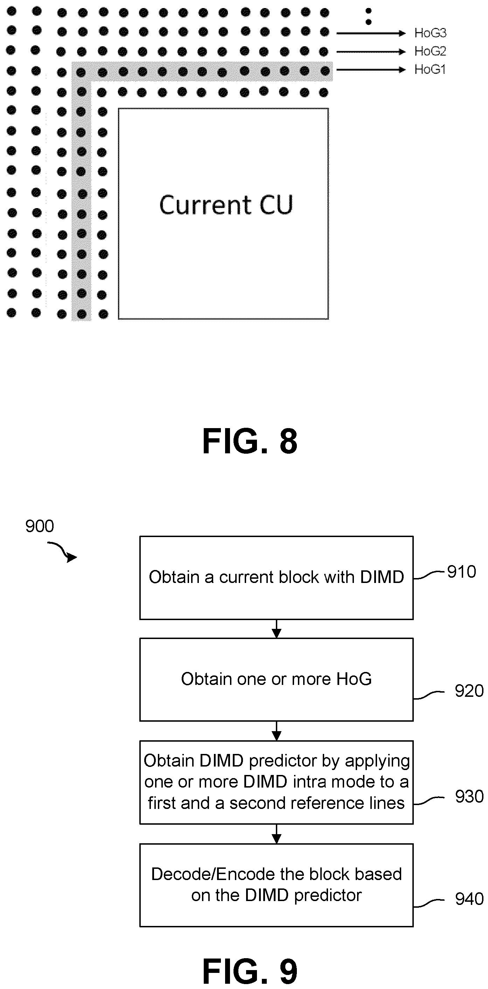

FIG.8 illustrates another example of the DIMD template used to form the gradients according to one or more embodiments of the present disclosure.

In the second embodiment, it is proposed to obtain a first histogram of gradients, HoG1 on FIG. 8, computed on a neighboring template of the current block associated with the first reference line; and to obtain a second histogram of gradients HoG2 computed on a neighboring template of the current block associated with second first reference line. Then, a first intra predictor is computed by applying a first intra prediction mode corresponding to a largest magnitude of values in the first histogram of gradients to the first reference line; and a second intra predictor is computed by applying a second intra prediction mode corresponding to a largest magnitude of values in the second histogram of gradients, HoG2 on FIG. 8, to the second reference line above or left to the first reference line. The present principles are not limited to 2 HoGs but may comprise 3 or more HoGs respectively for 3 or more reference lines as shown on FIG. 8, thus enlarging the template for HoG computation.

Accordingly, the adaptive HoG method for DIMD may be modified such that a HoG is computed per reference line.

Here the best predictors are selected for each HoG, and blended based on the HoG weights. Next, a single final predictor is computed by blending the individual predictors from each reference line. The weight of blending may be fixed or may depend on other criterion (e.g. MRL weights). In general, the weights are lower for reference lines farther from the current block. The number of best predictors may vary from one reference line to another. For example, the number of predictors is higher for reference lines closer to the current block.

**Feature(s) associated with TIMD mode interaction with DIMD mode using adaptive HoG per reference line are provided herein.**

In the third embodiment, it is proposed to use the modified decoder-side intra mode derivation DIMD in a template intra mode derivation TIMD wherein the intra modes derived from adaptive HoG per reference line may be candidates for template-based blending of the template intra mode derivation TIMD.

In TIMD mode, the two intra prediction modes (IPMs) providing the minimum SATD cost are selected. Currently in ECM, TIMD mode in combination with MRL accesses only two additional reference lines {1,3} above and left of the default reference line. The current reference line selection process for TIMD in ECM uses the reference line *l* for the first intra mode and uses the reference line *l* or *l* + 1 for the second intra mode based on the criteria described above with adaptive HoG.

In this embodiment, it is proposed to modify the TIMD mode to allow using more than two reference lines above and left of the current reference line when HoG in DIMD is computed on more than two reference lines. The predictors on the additional reference lines are computed using the angular intra modes from DIMD mode (e.g. 5 best IPMs from HoG). Thus, the angular modes from DIMD are added into the MPM list before the TIMD is computed. Advantageously, if DIMD angular modes were obtained from multiple reference lines, the embodiment then allows TIMD to use multiple reference lines too.

As a variant to above, TIMD mode is enhanced by adding angular intra modes from the HoG computed on the two reference lines {1,3} in MRL mode.

As a variant, the HoG is computed independently on each of the two reference lines in MRL mode. The best IPM is added from each reference line as a candidate for blending in TIMD mode where the predictor is generated using the corresponding reference line.

**Feature(s) associated with a generic encoding or decoding method implementing the present principles are provided herein.**

Various embodiments previously described that may be used in combination or independently and may be implemented in a generic decoding or encoding method as follows.

FIG. 9 illustrate a generic encoding or decoding method using DIMD according to one or more embodiments of the present disclosure. The method 900 of FIG. 9 may be implemented in an encoder of FIG. 2 or a decoder of FIG. 3. For sake of clarity, only the steps of an encoding or decoding deemed relevant to the present disclosure are illustrated on FIG. 9.

In a step 910, a block of a picture to be coded or decoded with decoder-side intra mode derivation DIMD is obtained. Various steps may be implemented that comply with the different variant embodiment of DIMD. For instance, in 920 one or more histogram of gradients computed on a neighboring template of the current block may be obtained. According to the first embodiment, one HoG may be computed either on a 3 neighboring lines template as shown on FIG. 4 or on a larger template comprising more than 3 neighboring lines as implemented with adaptive HoG. According to the second embodiment, one HoG per reference line may be computed as shown on FIG. 8. In a step 930, a DIMD predictor may be obtained by blending predictors from the respective one or more derived intra modes (IPMs) applied to the different reference lines. For instance, step 930 may comprise deriving a plurality of intra modes corresponding to a plurality of largest magnitude of values in a histogram of gradients; obtaining a plurality of intra predictors by applying some of the plurality of intra modes to a first reference line and others of the plurality of intra modes to a second reference line; and blending the plurality of intra predictors to obtain a predictor of the current block. Any of the variant embodiments previously described may be used in combination to obtain the plurality of predictors. Then, the process for encoding or decoding the block based on the DIMD blended predictor is performed in a step 940.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

> i. Encoding, into coded video data, syntax elements that can enable the decoder to decode the coded video data, according to any of the embodiments described herein.
> ii. A bitstream that includes one or more of the described syntax elements, or variations thereof, whether transmitted, stored, or otherwise made available.
> iii. Creating, transmitting, receiving, and/or decoding of the bitstream.
> iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

> i. session description protocol (SDP), for example as described in RFCs and/or used in conjunction with real-time transport protocol (RTP) transmission.
> ii. hypertext transfer protocol (HTTP) live Streaming (HLS) manifest transmitted over HTTP.
> iii. dynamic adaptive streaming over HTTP (DASH) media presentation description (MPD) descriptors, for example as used in DASH and transmitted over HTTP.
> iv. RTP header extensions, for example as used during RTP streaming.
> v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method of video decoding, comprising:

   determining (910) that a decoder-side intra mode derivation DIMD is used for predicting a current block;
   obtaining (920) a histogram of gradients computed on a neighboring template of the current block;
   deriving (930) a plurality of intra modes corresponding to a plurality of largest magnitude of values in a histogram of gradients;
   obtaining (930) a plurality of intra predictors by applying some of the plurality of intra modes to a first reference line and others of the plurality of intra modes to a second reference line;
   blending (930) the plurality of intra predictors to obtain a predictor of the current block; and
   decoding (940) the current block based on the predictor.

2. An apparatus comprising one or more processors, wherein the one or more processors are configured for:

   determining that a decoder-side intra mode derivation DIMD is used for predicting a current block;
   obtaining a histogram of gradients computed on a neighboring template of the current block;
   deriving a plurality of intra modes corresponding to a plurality of largest magnitude of values in a histogram of gradients;
   obtaining a plurality of intra predictors by applying some of the plurality of intra modes to a first reference line and others of the plurality of intra modes to a second reference line;
   blending the plurality of intra predictors to obtain a predictor of the current block; and
   decoding the current block based on the predictor.

3. The method of claim 1 or the apparatus of claim 2, wherein the plurality of intra modes comprises N intra modes, and wherein obtaining a plurality of intra predictors comprises:

   obtaining K intra predictors by applying K first intra prediction modes of the plurality of intra modes to the first reference line;

obtaining N-K intra predictors by applying following N-K intra prediction modes of the plurality of intra modes to the second reference line above or left to the first reference line;

with N being integer larger than 2 and K being integer larger than 1.

4. The method of any of claims 1, 3 or the apparatus of any of claims 2-3, wherein the neighboring template of the current block comprises more than 3 above and left lines.

5. The method of any of claims 1, 3-4 or the apparatus of any of claims 2-4, wherein the plurality of intra modes comprises a greater number of modes than a regular DIMD.

6. The method of any of claims 1, 3-5 or the apparatus of any of claims 2-5, the current block has a size larger than a certain block size.

7. The method of any of claims 1, 3-4 or the apparatus of any of claims 2-4 wherein the plurality of intra modes comprises angular intra prediction modes.

8. The method of claim 7 or the apparatus of claim 7, further comprising
determining that a prediction mode and a successive intra prediction mode in the plurality of intra mode are close and,
obtaining a first intra predictor by applying the prediction mode to the first reference line and a second intra predictor by applying the successive intra prediction mode to the second reference line.

9. The method of claim 8 or the apparatus of claim 8, further wherein a prediction mode and a successive intra prediction mode in the plurality of intra mode are close on condition that a difference between the prediction mode and the successive intra prediction mode is below a level.

10. The method of claim 4 or the apparatus of claim 4, wherein obtaining a histogram of gradients computed on a neighboring template of the current block comprises:

   obtaining a first histogram of gradients computed on a neighboring template of the current block associated with the first reference line; and
   obtaining a second histogram of gradients computed on a neighboring template of the current block associated with second first reference line.

11. The method of claim 10 or the apparatus of claim 10, wherein obtaining a plurality of intra predictors comprise:

   obtaining a first intra predictor by applying a first intra prediction mode corresponding to a largest magnitude of values in the first histogram of gradients to the first reference line; and
   obtaining a second intra predictor by applying a second intra prediction mode corresponding to a largest magnitude of values in the second histogram of gradients to the second reference line above or left to the first reference line.

12. The method of claim 11 or the apparatus of claim 11, wherein decoder-side intra mode derivation DIMD is used in a template intra mode derivation TIMD and wherein the first intra prediction mode and the second intra prediction mode are candidate for template-based blending of the template intra mode derivation TIMD.

13. A method of encoding, comprising:

   determining (910) that a decoder-side intra mode derivation DIMD is used for predicting a current block;
   obtaining (920) a histogram of gradients computed on a neighboring template of the current block;
   deriving (930) a plurality of intra modes corresponding to a plurality of largest magnitude of values in a histogram of gradients;
   obtaining (930) a plurality of intra predictors by applying some of the plurality of intra modes to a first reference line and others of the plurality of intra modes to a second reference line;
   blending (930) the plurality of intra predictors to obtain a predictor of the current block; and
   encoding (940) the current block based on the predictor.

14. An apparatus comprising one or more processors, wherein the one or more processors are configured for:

determining that a decoder-side intra mode derivation DIMD is used for predicting a current block;

obtaining a histogram of gradients computed on a neighboring template of the current block;

deriving a plurality of intra modes corresponding to a plurality of largest magnitude of values in a histogram of gradients;

obtaining a plurality of intra predictors by applying some of the plurality of intra modes to a first reference line and others of the plurality of intra modes to a second reference line;

blending the plurality of intra predictors to obtain a predictor of the current block; and

encoding the current block based on the predictor.

15. A computer program comprising instructions which when executed by one or more processors cause the one or more processors to perform the encoding or decoding method according to any of claims 1, 3-13.

**FIG. 1**

FIG. 2

**FIG. 3**

EP 4 734 506 A1

402   401

400

Current CU

# FIG. 4

Segment D   Segment E   Segment F

Segment C

Reference line 3
Reference line 2
Reference line 1
Reference line 0

Block Unit

Segment B

Segment A

# FIG. 5

# FIG. 6

Reference line 3
Reference line 2
Reference line 1

Top template

Left template

**Block Unit**

# FIG. 7

HoG3
HoG2
HoG1

Current CU

FIG. 8

900

Obtain a current block with DIMD —910

Obtain one or more HoG — 920

Obtain DIMD predictor by applying one or more DIMD intra mode to a first and a second reference lines — 930

Decode/Encode the block based on the DIMD predictor — 940

FIG. 9

Europäisches
Patentamt

European
Patent Office

Office européen
des brevets

## EUROPEAN SEARCH REPORT

**Application Number**

EP 24 30 6770

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/022146 A1 (MEDIATEK INC [CN]) 1 February 2024 (2024-02-01) | 1-9, 13-15 | INV. H04N19/105 |
| Y | * page 3, line 13 - line 14 * * page 8, line 22 - page 9, line 4 * * page 18, line 4 - line 5 * * page 21, line 18 - line 20 * * page 22, line 22 - line 24 * * page 31, line 33 - page 32, line 3 * * page 43, line 24 * | 10-12 | H04N19/11 H04N19/14 H04N19/176 H04N19/593 |
| | ----- | | |
| Y | RUFITSKIY (TCL) V ET AL: "Non-EE2: Non-adjacent DIMD mode derivation for TMRL intra mode candidate list construction", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0148 14 July 2024 (2024-07-14), XP030320399, Retrieved from the Internet: URL:https://jvet-experts.org/doc_end_user/ documents/35_Sapporo/wg11/JVET-AI0148-v2.z ip JVET-AI0148-v2.docx [retrieved on 2024-07-14] * abstract * * section 2 * | 10-12 | |
| | ----- | | |
| | -/-- | | |

**TECHNICAL FIELDS SEARCHED (IPC)**

H04N

The present search report has been drawn up for all claims

| Place of search | Date of completion of the search | Examiner |
|---|---|---|
| Munich | 22 March 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**page 1 of 2**

| | Europäisches Patentamt European Patent Office Office européen des brevets | **EUROPEAN SEARCH REPORT** | Application Number EP 24 30 6770 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | COBAN M ET AL: "Algorithm description of Enhanced Compression Model 14 (ECM 14)", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI2025 21 October 2024 (2024-10-21), XP030323411, Retrieved from the Internet: URL:https://jvet-experts.org/doc_end_user/ documents/35_Sapporo/wg11/JVET-AI2025-v1.z ip JVET-AI2025-v1.docx [retrieved on 2024-10-21] * sections 3.1.3 and 3.1.8 * ----- | 12 | |
| | | | TECHNICAL FIELDS SEARCHED (IPC) |

The present search report has been drawn up for all claims

| Place of search | Date of completion of the search | Examiner |
|---|---|---|
| Munich | 22 March 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6770

This annex lists the patent family members relating to the patent documents cited in  the above-mentioned European search report.
The members are as contained in the European Patent Office EDP file on
The European Patent Office is in no way liable for these particulars which are merely given for the purpose of information.

22-03-2025

| Patent document cited in search report | Publication date | Patent family member(s) | Publication date |
|---|---|---|---|
| WO 2024022146 A1 | 01-02-2024 | TW 202412524 A | 16-03-2024 |
| | | WO 2024022146 A1 | 01-02-2024 |

EPO FORM P0459

For more details about this annex : see Official Journal of the European Patent Office, No. 12/82